# EUROPÄISCHE PATENTSCHRIFT

(11) **EP 2 653 895 B1**
(45) Veröffentlichungstag und Bekanntmachung des Hinweises auf die Patenterteilung: **10.07.2019**
(21) Anmeldenummer: 12004144.7
(22) Anmeldetag: 30.05.2012
(51) Int. Cl.: G01V 3/10, G01V 3/38, G01V 3/15

(54) **Verfahren zur Detektion von Objekten**
Method for detecting objects
Procédé de détection d'objets

(30) Priorität: 17.04.2012 DE 102012008037
(43) Veröffentlichungstag der Anmeldung: 23.10.2013
(73) Patentinhaber: Ebinger, Klaus, 51149 Köln (DE)
(72) Erfinder: Ebinger, Klaus, 51149 Köln (DE)
(74) Vertreter: Wunderlich & Heim Patentanwälte Partnerschaftsgesellschaft mbB

(56) Entgegenhaltungen:
- EP-A1- 0 892 285
- EP-A2- 0 729 039
- EP-A2- 0 780 705
- US-A1- 2008 094 066

## Beschreibung

Die Erfindung betrifft ein Verfahren zum Detektieren von Objekten in einem Messfeld. Hierbei wird durch eine Sendespule ein Primärpuls ausgesendet. Dieser Primärpuls erzeugt im Erdboden und in dort vorhandenen Objekten Ströme, insbesondere Wirbelströme, wodurch wiederum Sekundärsignale entstehen. Diese Sekundärsignale können mit einer Empfangsschleife empfangen werden. Zur Auswertung der Sekundärsignale ist es bekannt, die in der Sekundärschleife vorhandenen Signale zu zwei unterschiedlichen Zeitpunkten abzutasten, um anhand der beiden Abtastsignale Aussagen über im Empfangsbereich der Empfangsschleife liegende Objekte tätigen zu können.

Ein derartiges, analoges Verfahren ist beispielsweise aus der DE 195 06 339 C2 sowie aus der EP 0 892 285 A1 bekannt. In diesen beiden Druckschriften wird das oben beschriebene Verfahren, welches auch als Pulsinduktionsverfahren (PI) bezeichnet wird, verwendet.

Hierbei wird das Verfahren jeweils in Bezug auf eine Hand- oder Tellersonde beschrieben, bei der durch eine optimale Zeitwahl der einzelnen Abtastzeitpunkte und entsprechende Verstärkung, eine Bodenkompensation durchgeführt werden kann. Es ist so möglich, Objekte in stark mineralisierten Böden zu detektieren.

Nachteilig an den bisher bekannten Verfahren ist jedoch, dass durch die einmal fest eingestellte Bodenkompensation meist ein Reichweitenverlust von 20 bis 25% einhergeht. Des Weiteren ist es zwingend erforderlich, dass an dem Ort an dem die Sonde auf den Boden eingestellt wird, das heißt die Verstärkungsfaktoren der beiden Abtastwerte eingestellt werden, kein Objekt in Reichweite ist. Sollte ein Objekt oder eine andere Anomalie vorhanden sein, so wird die Bodenkompensation falsch eingestellt, was zu einer Verfälschung der Messwerte und zu ungenauem Ergebnissen führt.

Die beiden Detektoren welche aus dem Stand der Technik bekannt sind, eignen sich im Wesentlichen für eine "vor Ort" Lokalisierung von im Erdboden befindlichen Objekten.

Die Weiterentwicklung im Gebiet der Kampfmitteldetektion und -räumung geht dahin, dass große Flächen untersucht werden, ermittelte Daten aufgezeichnet und dann später einer nachgeschalteten Auswertung zugeführt werden, um eine sogenannte Flächenkartierung eines Gebietes vornehmen zu können. Dies hat sich als effizientes und kostengünstiges Verfahren herauskristallisiert. In diesem Verfahren sollen insbesondere Fliegerbomben, Minen und/oder Granaten, welche sich zum Teil noch im Erdboden befinden, detektiert und wenn möglich identifiziert werden. Ein derartiges Verfahren ist allerdings mit dem aus dem Stand der Technik bekannten Pulsinduktionsdetektoren nicht ohne weiteres möglich.

Aus der US 2008/0094066 A1 ist ein Continuous-Wave-Verfahren bekannt. Hierbei wird ein zeitlich unterschiedliches elektromagnetisches Signal kontinuierlich in den Boden eingestrahlt und simultan aufgezeichnet. Die Aufzeichnung findet an unterschiedlichen Stellen wie das Aussenden statt.

Der Erfindung liegt die **Aufgabe** zugrunde, ein Verfahren zur Detektion von Objekten in einem Messfeld anzugeben, welches gute Rückschlüsse auf vorhandene Objekte zulässt und einfache Schlussfolgerungen ermöglicht.

Diese Aufgabe wird erfindungsgemäß durch ein Verfahren mit den Merkmalen des Anspruchs 1 gelöst.

Weitere vorteilhafte Ausführungsformen sind in den Unteransprüchen, der Beschreibung sowie den Figuren und deren Beschreibung angegeben.

Das erfindungsgemäße Verfahren kann in zwei Schritte gegliedert werden. Zum einen in das Ermitteln von Messwerten und zum anderen in das Auswerten der ermittelten Messwerte.

Entsprechend der Erfindung werden die Messwerte dadurch ermittelt, dass zuerst mittels einer Sendeschleife Primärimpulse ausgesendet werden. Die durch die Primärimpulse erzeugten, insbesondere induzierten, Sekundärsignale werden mittels einer Empfangsschleife wiederum empfangen. Die durch die Empfangsschleife empfangenen Sekundärsignale beziehungsweise deren Signalverläufe werden einer Abtastung zugeführt, wobei jedes Sekundärsignal zu mindestens zwei Zeitpunkten zum Ermitteln von zumindest zwei Messwerten abgetastet wird.

Hierbei ist es vorgesehen, dass die Empfangsschleife jeweils an unterschiedlichen Orten innerhalb des Messfeldes zum Empfangen der Sekundärsignale platziert wird und die Messwerte mittels einer Georeferenz georeferenziert aufgenommen beziehungsweise verknüpft werden. Mit anderen Worten wird die Empfangsschleife während des Empfangsvorgangs innerhalb des Messfeldes bewegt. Hierbei sind jedoch die Zeitpunkte zu denen das Sekundärsignal abgetastet wird, derart nah aneinanderliegend, dass, unabhängig von der möglichen Bewegung der Empfangsschleife, davon gesprochen werden kann, dass das jeweilige Sekundärsignal am selben Ort zu mehreren Zeitpunkten abgetastet wird.

Entsprechend der Erfindung werden die so aufgenommenen und georeferenzierten Sekundärsignale beziehungsweise Messwerte anschließen einer Auswertung zugeführt. Hierbei werden die Messwerte, welche zum selben Zeitpunkt abgetastet wurden, zu einer Messwertgruppe zusammengefasst. Im Sinne der Erfindung ist unter demselben Zeitpunkt der Zeitpunkt beziehungsweise Abstand in Bezug auf das jeweilige Primärsignal zu verstehen. Wenn die Sekundärsignale zu zwei Zeitpunkten t₁ und t₂ abgetastet wurden, werden also zwei Messwertgruppen erstellt, einmal für den Zeitpunkt t₁ und einmal für den Zeitpunkt t₂.

Es werden also Messwerte von mehreren Sekundärsignalen, welche denselben zeitlichen Abstand zu ihrem jeweiligen Primärsignal aufweisen, zu Messwertgruppen zusammengefasst. Hierbei kann beispielsweise der zeitliche Abstand vom Zeitpunkt des Aussendens oder der maximalen Amplitude des Primärsignals an gemessen werden.

Anschließend werden zu den Messwertgruppen eine oder mehrere statistische Charakteristika ermittelt und mittels dieser statistischen Charakteristika für die Messwertgruppen Skalierungsfaktoren bestimmt oder errechnet. Hierbei kann sowohl für jede Messwertgruppe einzeln eine oder mehrere statistische Charakteristika ermittelt werden, wie auch jeweils für alle oder einen Teil der Messwertgruppen. Ebenso ist es möglich, den Skalierungsfaktor für jede Messwertgruppe einzeln zu bestimmen sowie auch jeweils einen Skalierungsfaktor für eine Gruppe von Messwertgruppen.

Dann werden die mindestens zwei Messwertgruppen mit dem jeweiligen Skalierungsfaktor skaliert und miteinander arithmetisch zu mindestens einer Ergebnisgruppe verknüpft. Hierbei werden bei der arithmetischen Verknüpfung der Messwertgruppen jeweils Messwerte desselben Ortes verknüpft, wobei die Zuordnung auf Grundlage der aufgenommenen Georeferenz erfolgt. Anschließend wird die mindestens eine Ergebnisgruppe in einer ein- oder mehrdimensionalen Wertekarte ausgegeben.

Ein Grundgedanke der Erfindung kann darin gesehen werden, statistische Charakteristika der Messwertgruppen zu verwenden, um die Skalierungsfaktoren zu errechnen. Dadurch, dass alle Werte einer Messwertgruppe herangezogen werden, um die statistischen Charakteristika zu ermitteln, wird erreicht, dass die Skalierungsfaktoren auf zuverlässigen Grundlagen bestimmt beziehungsweise errechnet werden, so dass keine Verfälschung der Messwerte durch die Anwendung der Skalierungsfaktoren erfolgt.

Ein weiterer Aspekt der mit der Erfindung erreicht wird ist, dass eine Bodenkompensation, im Hinblick auf ein Eliminieren beziehungsweise Unterdrücken von Störeffekten, die insbesondere bei magnetischen und/oder mineralischen Böden vorhanden sind, durchgeführt werden kann. Wie aber des Weiteren erkannt wurde, können mittels des erfindungsgemäßen Verfahrens Störpegel beziehungsweise Rauschen, welche beziehungsweise welches in den Messwerten vorhanden sind, deutlich reduziert beziehungsweise unterdrückt werden. Das heißt im Ergebnis, insbesondere in der Ergebnisgruppe liegt ein viel besseres SNR (Signal to Noise Ratio) vor, als dies in den Ausgangsdaten vorhanden war.

Bei der Testphase der Erfindung hat sich herausgestellt, dass es mit dem erfindungsgemäßen Verfahren möglich ist, auf Testplätzen Objekte zu orten beziehungsweise nachzuweisen, die mit herkömmlichen und vergleichbaren Verfahren nicht mehr zu orten waren. So ist es beispielsweise möglich gewesen, eine senkrecht stehende 250 kg-Bombe in einer Tiefe von 5,5 m nachzuweisen. An einem derartigen Testobjekt scheitern die bekannten Verfahren aus dem Stand der Technik.

Im Sinne der Erfindung kann eine arithmetische Verknüpfung als eine Addition, Subtraktion, Multiplikation und/oder Division einzelner oder mehrerer Werte verstanden werden.

Zum Berechnen der Skalierungsfaktoren für die Messwertgruppen können verschiedene statistische Charakteristika herangezogen werden. Diese können sich auf die Messwerte einer Messwertgruppe oder auch auf die Messwerte mehrere Messwertgruppen oder aller Messwertgruppen beziehen. Auch ist es möglich, eine statistische Charakteristik einer Messwertgruppe ins Verhältnis mit derselben statistischen Charakteristik einer anderen Messwertgruppe zu setzen, um hieraus einen Skalierungsfaktor zu berechnen. Dies ist insbesondere bevorzugt, wenn anschließend diese beiden Messwertgruppen miteinander arithmetisch verrechnet werden.

Als statistische Charakteristika können Informationen über Streuungsparameter, insbesondere die (Stichproben-)Varianz, die Standardabweichung, die Spannweite, die mittlere absolute Abweichung und/oder der (Inter)-Quantialsabstand verwendet werden. Ebenso ist es möglich, Informationen zu Lageparametern wie das arithmetische, geometrische oder harmonische Mittel heranzuziehen. Auch ist es möglich Kombinationen dieser Charakteristika zu verwenden. Besonders einleuchtend ist es, das arithmetische Mittel verschiedener Messwertgruppen miteinander zu vergleichen, wobei abhängig von der späteren arithmetischen Verrechnung auch andere statistische Charakteristika, wie insbesondere die Spannweite, herangezogen werden können.

Grundsätzlich kann jedes Sekundärsignal beliebig oft abgetastet werden, um beliebig viele Messwerte zu erhalten. Es hat sich jedoch herausgestallt, dass sechs Abtastwerte ausreichend viele Informationen liefern, ohne unnötig viele Abtastwerte zu erzeugen, die zum einen eine übergroße Datenmenge mit sich bringen und zum anderen keine wesentlichen Unterschiede zu jeweils benachbarten Messwerten mehr aufweisen.

Wenn jedes Sekundärsignal zu N-Zeitpunkten zum Ermitteln von Messwerten abgetastet wird, wobei N eine natürliche Zahl ≥ 2 ist, stehen verschiedene Möglichkeiten zur anschließenden arithmetischen Verrechnung der Messwertgruppen zueinander zur Verfügung. Beispielsweise ist es möglich, die jeweils skalierten Messwertgruppen derart arithmetisch miteinander zu verknüpfen, dass die skalierte Messwertgruppe des ersten Abtastzeitpunktes jeweils mit der skalierten Messwertgruppe des zweiten bis N-ten Abtastzeitpunktes verknüpft wird, um N-1 Ergebnisgruppen zu erzeugen. Hierbei sind die Ergebnisgruppen dann immer in Bezug auf die Messwertgruppe des ersten Zeitpunktes bezogen.

Eine andere Möglichkeit ist es, jeweils skalierte Messwertgruppen benachbarter Zeitpunkte miteinander arithmetisch zu verknüpfen. Ein derartiges Vorgehen bietet eine besonders gute Bodenkompensation.

Auch ist es möglich, Ergebnisgruppen mindestens zweier arithmetisch verknüpfter skalierter Messwertgruppen erneut arithmetisch miteinander zu verknüpfen. Beispielsweise ist es möglich, wenn vier Messwertgruppen für die Zeitpunkte t₁, t₂, t₃ und t₄ vorliegen, zuerst die skalierten Messwertgruppen für den Zeitpunkt von t₁ und t₂ zu addieren. Selbiges kann in Bezug auf die Messwertgruppen für die Zeitpunkte t₃ und t₄ durchgeführt werden. Anschließend werden die zwei somit ermittelten Ergebnisgruppen voneinander subtrahiert.

Grundsätzlich besteht keine Beschränkung in der Art der arithmetischen Verknüpfung der mindestens zwei Messwertgruppen. Es hat sich jedoch herausgestellt, dass unterschiedliche arithmetische Verknüpfungen abhängig vom Bodentyp zu bevorzugen sind. Aufgrund der unbegrenzten Menge von unterschiedlichen Bodentypen ist es hierbei nur schwer möglich eine allgemeine Vorschrift für bevorzugte arithmetische Verknüpfungen anzugeben.

Jedoch liegt der Erfindung die Erkenntnis zugrunde, dass die arithmetische Verknüpfung idealerweise derart gewählt wird, dass Störsignale und/oder Rauschen in der Ergebnisgruppe, welche durch die arithmetische Verknüpfung mindestens zweier Messwertgruppen erzeugt wird, bestmöglich unterdrückt werden.

Auch ist es denkbar, die arithmetische Verknüpfung gegebenenfalls so zu wählen, dass ein geringer Rauschpegel toleriert wird, um zum Beispiel spezifische Störeffekte des Bodens besser kompensieren zu können.

Um eine Auswahl der möglichen arithmetischen Verknüpfung verschiedener Messwertgruppen zu erleichtern, kann es ferner vorgesehen sein, die Messwertgruppen in einer zwei- oder mehrdimensionalen, insbesondere farbigen, Wertekarte auszugeben. Hierdurch wird dem Bediener einer Computeranlage, die zum Ausführen des erfindungsgemäßen Verfahrens ausgelegt ist, die Auswahl der arithmetischen Verknüpfung vereinfacht, da ihm mit den "Zwischenergebnissen" eine Entscheidungsgrundlage geliefert wird.

In ähnlicher Weise ist es für die Analyse der aufbereiteten Daten vorteilhaft, wenn die mindestens eine zwei- oder mehrdimensionale Ergebnisgruppe eine Farbcodierung aufweist, so dass einzelne Messwertebereiche jeweils einer bestimmten Farbe zugewiesen sind. Dies erleichtert die Aufnahme der vorhandenen Informationen durch eine beteiligte Person.

Als Georeferenz kann grundsätzlich jede Georeferenz verwendet werden, die geeignet ist, Messwerte zu georeferenzieren. Hierbei kann beispielsweise eine relative Georeferenz zu einem Punkt im Messfeld oder auch eine absolute Georeferenz zu einem bekannten Georeferenzsystem, beispielsweise WGS 84, verwendet werden.

Insbesondere die Verwendung von GPS oder DGPS-Systemen, aber auch zukünftig Galileo, bietet sich zur Georeferenzierung der Messwerte an.

Der Primärpuls, welcher durch die Sendeschleife ausgesendet wird, kann beispielsweise eine Zeitdauer im Bereich von 1 ms aufweisen. Bevorzugt ist, wenn er als Bipolarimpuls ausgeformt ist. Es hat sich herausgestellt, dass Primärimpulse als Bipolarimpulse, welche die zuvor genannte Länge aufweisen, besonders gute und aussagekräftige Detektionsergebnisse ermöglichen.

Die Abtastzeitpunkte des Sekundärsignales sollten bevorzugterweise in Bereichen von 80 µs bis 1,3 ms nach Beendigung des Aussendens des Primärimpulses liegen. Ein Abtasten vor 80 µs nach Beendigung des Aussendens des Primärimpulses wird oft durch den abklingenden Primärimpuls verfälscht, so dass die abgetasteten Werte nicht dem Sekundärimpuls entsprechen. Eine Abtastung der Sekundärimpulse nach 1,3 ms wiederum bringt kaum noch weitere Ergebnisse, da der Sekundärimpuls bereits zu stark abgeklungen ist. Beispielsweise kann beim Ermitteln von zwei Abtastwerten ein erster Abtastwert für ein Abtastfenster von 80 bis 120 µs und ein zweiter Abtastwert für ein Abtastfenster von 135 bis 205 µs nach Beendigung des Aussendens des Primärpulses erzeugt werden.

Hierbei ist zu berücksichtigen, dass im Sinne der Erfindung der Begriff Zeitpunkt in Bezug auf das Abtasten nicht lediglich als Abtasten zu einem exakten Zeitpunkt, beispielsweise bei 154 µs nach Beendigung des Aussendens des Primärimpulses zu verstehen ist, sondern, dass hierunter auch ein Zeitfenster einer gewissen Breite zu verstehen ist, in dem die Abtastung des Sekundärsignales durchgeführt wird. Als Messwert kann dann beispielsweise der Mittelwert der abgetasteten Messwerte in dem Zeitfenster verwendet werden, der maximale oder minimale Abtastwert in dem Zeitfenster oder die Summe aller abgetasteten Werte in dem Zeitfenster.

Das erfindungsgemäße Verfahren kann mit verschieden konfigurierten Sendeschleifen verwendet werden. Hierbei bietet sich zum einen die Verwendung einer stationären Großschleife als Sendeschleife an. Diese kann beispielsweise quadratisch ausgebildet sein und eine Seitenlänge von 20 bis 40 m aufweisen. Auch die Verwendung von Großschleifen mit einer größeren Kantenlänge ist möglich. Es ist aber auch denkbar, als Sendeschleife eine mobile Schleife zu verwenden, die beispielsweise eine Länge oder einen Durchmesser von ca. 1 m aufweist.

In ähnlicher Weise sind verschiedene Konfigurationen als Empfangsschleife einsetzbar. Grundsätzlich sollte eine mobile Schleife verwendet werden, die beispielsweise einen Durchmesser von 260 mm oder eine Länge im Bereich von 1 m aufweisen kann.

Es ist aber abhängig vom Einsatzzweck auch die Verwendung von anderen Sende- und Empfangsschleifen möglich. Beispielsweise würden bei einer sogenannten Bohrlochsondierung (EP 1 189 076 A2) entsprechend angepasste und ausgebildete Sende- und Empfangsschleifen verwendet werden.

Abhängig von dem zu untersuchenden Messfeld kann demnach eine stationäre Großschleife oder auch eine mobile, sogenannte fahrbetriebene Großschleife, verwendet werden. Innerhalb der Großschleife als Sendeschleife werden ein oder mehrere, insbesondere zwei Empfangsschleifen zur Aufnahme von Sekundärsignalen, zum Beispiel auch übereinander, angeordnet. Eine fahrbetriebene Großschleife kann beispielsweise auf einem fahrbaren Gestell auf zwei oder drei Rädern über das Messfeld bewegt werden. Im Fall einer fahrbetriebenen Großschleife ist es angebracht, die Empfangsschleife(n) ebenfalls an dem Gestell des fahrbaren Untersatzes der Sendeschleife zu befestigen.

Die Erfindung wird nachfolgend anhand von Ausführungsbeispielen und schematischen Zeichnungen näher erläutert. In diesen Zeichnungen zeigen:
- Fig. 1: eine Skizze zur Verdeutlichung der Datenerhebung;
- Fig. 2: ein Diagramm zur Erläuterung der Sekundärsignalabtastung;
- Fig. 3: eine beispielhafte Datenstruktur der Messwerte;
- Fig. 4: sechs Messwertekarten und
- Fig. 5: vier Ergebniswertekarten.

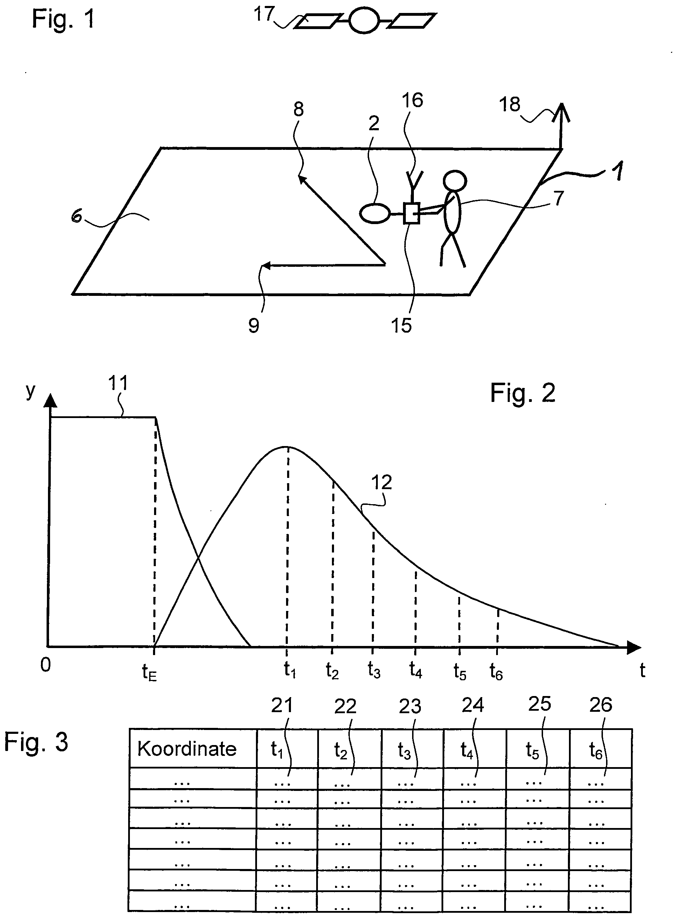

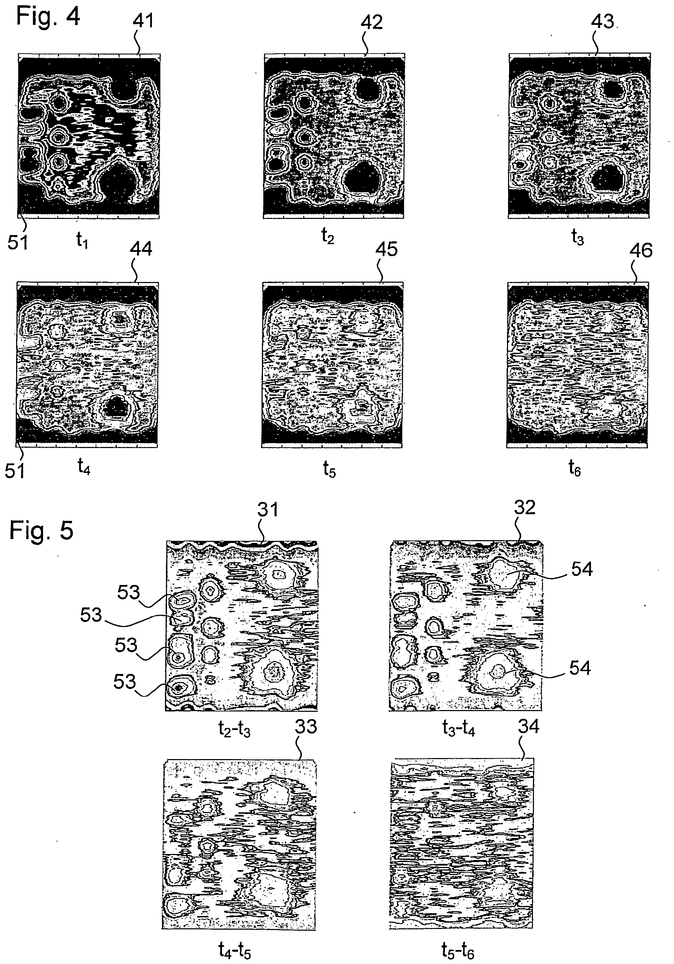

Im Folgenden wird unter Bezugnahme auf die Figuren 1 bis 3 die Datenerhebung beziehungsweise das Erzeugen der Messwerte sowie deren Struktur beschrieben. Anschließend wird unter Bezugnahme auf die Figuren 4 und 5 die Auswertung und Aufbereitung der Messwerte erläutert.

Um im Untergrund eines Messfeldes 6 befindliche Objekte zu detektieren, wird zuerst ein Messfeld 6 auf der Erdoberfläche definiert. Dies kann beispielsweise durch Festlegen der Eckpunkte eines quadratischen oder rechteckigen Messfeldes erfolgen.

Bei der Datenerhebung wie sie in Fig. 1 dargestellt ist, wird eine Sendeschleife 1 in Form einer Großschleife verwendet, die am Rand des Messfeldes verläuft und dieses gleichzeitig auch definiert. Über die Sendeschleife 1 wird in einem ersten Schritt ein Primärimpuls ausgesendet, der bevorzugt ein Bipolarimpuls ist.

Innerhalb des Messfeldes befindet sich ein Anwender 7 mit einer Empfangsschleife 2. Der ausgesendete Primärimpuls 11 der Sendeschleife 1 induziert im Boden und in dort befindlichen Objekten Wirbelströme, die wiederum Sekundärsignale 12 erzeugen. Diese Sekundärsignale 12 werden in einem zweiten Schritt mit der Empfangsschleife 2, die vom Anwender 7 bedient wird, empfangen und einer Auswertung zugeführt. Diese Auswertung kann direkt in der Elektronik der Empfangsschleife 2 aber auch in einem angeschlossenen Datenlogger 15 erfolgen.

Um Messwerte für das gesamte Messfeld 6 zu erhalten, bewegt sich der Anwender 7 über das Messfeld 6. Hierbei wird kontinuierlich mittels der Sendeschleife 1 ein Primärimpuls 11 ausgesendet und die so entstehenden Sekundärsignale 12 durch die Empfangsschleife 2 aufgenommen und wie in Bezug auf Fig. 2 genauer beschrieben, aufbereitet.

Der Primärimpuls hat eine Länge von ca. 1 ms. Die Sekundärsignale werden in einem Bereich von 80 µs bis 1,3 ms nach Beendigung des Primärimpulses 11 ausgewertet, so dass selbst wenn sich der Anwender 7 innerhalb des Messfeldes 6 bewegt, die aufgenommenen Sekundärsignale 12 immer für einen bestimmten Ort anzunehmen sind. Um diesen Ort zu bestimmen weist der Datenlogger 15 zusätzlich einen Georeferenzempfänger 16 auf. Dieser kann beispielsweise als GPS-Empfänger ausgebildet sein und zusammen mit GPS-Satelliten 17 zur Positionsbestimmung verwendet werden. So ist es möglich, zusätzlich oder alternativ eine lokale Georeferenz 18 zu verwenden.

Wie bereits beschrieben, bewegt sich der Anwender 7 über das gesamte Messfeld 6. Dies erfolgt bevorzugt auf einem vorgegebenen Weg, so dass sichergestellt wird, dass er an jedem Ort 8, 9 des Messfeldes Messwerte der Sekundärsignale ermittelt hat.

In Bezug auf Fig. 2 wird nun die Ermittlung der Messwerte für einen Ort exemplarisch beschrieben. Hierbei ist in dem Diagramm der Fig. 2 auf der X-Achse die Zeit und auf der Y-Achse die Feldstärke der jeweiligen Impulse beziehungsweise Signale im Betrag dargestellt. Zuerst wird ein Primärimpuls 11 vom Zeitpunkt 0 bis zum Zeitpunkt t_{E} mittels der Sendeschleife 1 ausgesendet. Zum Zeitpunkt t_{E} wird das Erzeugen des Primärimpulses 11 eingestellt. Dieser klingt jedoch erst zeitverzögert ab.

Durch den Primärimpuls 11 werden Ströme im Erdboden und in dort befindlichen Objekten induziert, die das Sekundärsignal 12 erzeugen. Dies kann vereinfacht als elektromagnetisches Echo der Suchobjekte und des Erdbodens angesehen werden. Auch dieses Sekundärsignal 12 klingt über die Zeit ab. Zu beliebigen Zeitpunkten t₁ bis t₆ wird das Sekundärsignal nun abgetastet und die entsprechenden Abtastwerte als Messwerte gespeichert. Hierbei ist zu berücksichtigen, dass es sich bei den Zeitpunkten t₁ bis t₆ auch um Zeitfenster handeln kann.

Die so ermittelten Messwerte 21, 22, 23, 24, 25, 26 für die Zeitpunkte t₁ bis t₆ werden anschließend georeferenziert in dem Datenlogger 15 in einer exemplarisch in Fig. 3 dargestellten Datenstruktur abgespeichert. Hierbei werden die Messwerte 21, 22, 23, 24, 25, 26 zu den Zeitpunkten t₁ bis t₆ jeweils mit einem Ort verknüpft, in dem eine Koordinate, welche beispielsweise über das GPS erhalten wird, zusätzlich abgespeichert ist. Nach einer erfolgreichen Datenerhebung liegen in dieser Datenstruktur Messwerte 21, 22, 23, 24, 25, 26 zu den Zeitpunkten t₁ bis t₆ für jede Position innerhalb des Messfeldes 5 vor. Grundsätzlich ist es auch möglich, die Abtastung des Sekundärsignals zu weniger oder mehr Zeitpunkten durchzuführen. Entsprechend liegen dann weniger oder mehr Messwerte für eine Position beziehungsweise einen Ort 8, 9 vor.

Nach der Datenaufnahme mittels des Datenloggers und dem zuvor in Bezug auf Fig. 1 beschriebenen Verfahren, werden die ermittelten Messwerte einer Auswertung zugeführt. Dies kann direkt vor Ort, beispielsweise mittels eines Laptops, oder auch zu einem späteren Zeitpunkt in einem Büro erfolgen. Auch ist es möglich, für die Ermittlung der Daten beziehungsweise Messwerte einen Anwender 7 einzusetzen, der weniger technisches Wissen aufweist, da er lediglich sicherstellen muss, dass die Messwerte richtig für jeden Messpunkt innerhalb des Messfeldes 6 ermittelt werden. Die anschließende Auswertung kann dann durch einen Spezialisten durchgeführt werden. Dies ist aber nicht zwingend notwendig, da durch das erfindungsgemäße Verfahren die Daten derart aufbereitet werden, dass auch für weniger erfahrene Anwender eine Interpretation möglich ist.

Die bis jetzt durchgeführten Verfahrensschritte dienen im Wesentlichen zum Erzeugen und Aufzeichnen der Rohdaten, die beispielsweise mit Störungen aufgrund von magnetischen Böden sowie mit Rauschen versehen sind.

Zuerst werden die ermittelten Messwerte zu Messwertgruppen zusammengefasst. Dies geschieht derart, dass eine Datenstruktur, beispielsweise eine mehrdimensionale Datenmatrix erstellt wird, die jeweils die ermittelten Messwerte 21, 22, 23, 24, 25, 26 für jeden Punkt innerhalb des Messfeldes 6 zu einem bestimmten Abtastzeitpunkt beinhaltet. In dem hier dargestellten Beispiel wird also für jeden der sechs Abtastzeitpunkte eine Messwertgruppe erstellt, so dass sechs Messwertgruppen vorliegen.

Anschließend werden statistische Charakteristika für die einzelnen Messwertgruppen ermittelt. Beispielsweise ist es möglich, das arithmetische Mittel der empfangenen Messwerte für jede Messwertgruppe, das heißt für die Messwerte eines Abtastzeitpunktes, zu errechnen.

Durch den Vergleich des arithmetischen Mittels der verschiedenen Messwertgruppen untereinander wird nun für jede Messwertgruppe ein Skalierungsfaktor errechnet. Dieser kann beispielsweise derart berechnet werden, dass die ermittelten Werte zum Zeitpunkt t₁ verringert werden, wohingegen die Werte, welche zum Zeitpunkt t₄, t₅ und t₆ ermittelt wurden, verstärkt werden.

Mittels des jeweiligen Skalierungsfaktors wird nun jede Messwertgruppe verarbeitet, so dass eine skalierte bearbeitete Messwertgruppe vorliegt. Diese Messwertgruppe kann dem Benutzer wie in Fig. 4 gezeigt, auf einer zweidimensionalen, farbcodierten Wertekarte ausgegeben werden. Im Original ist diese Wertekarte nicht nur in Grautönen ausgeführt, sondern weist farbliche Abstufungen auf. Es ist aber auch möglich, vor der Skalierung die Messwertgruppen auf Wertekarten darzustellen, so dass der Benutzer auch in die Wahl der statistischen Charakteristika zum Erzeugen der Skalierungsfaktoren mit eingreifen beziehungsweise die entsprechenden statistischen Charakteristika auswählen kann.

In Fig. 4 sind sechs Wertekarten für sechs verschiedene Abtastzeitpunkte dargestellt.

Anschließend werden einzelne oder alle in Fig. 4 dargestellten Messwertgruppen miteinander arithmetisch verknüpft. Dies ist exemplarisch in Fig. 5 gezeigt, wobei vier Ergebniswertekarten abgebildet sind. Die Ergebniswertekarte 31 stellt eine Ergebnisgruppe dar, die aus der Subtraktion der Messwertgruppe 43 von der Messwertgruppe 42 erzeugt wurde. In ähnlicher Weise stellen die Ergebniswertekarten 32 bis 34 Ergebnisgruppen dar, die durch die Subtraktion der Messwertgruppen 44 von 43, 45 von 44 und 46 von 45 erhalten werden. Hierbei wurde jeweils vor der Subtraktion ein entsprechend angepasster Skalierungsfaktor auf die beiden in der Subtraktion beinhalteten Messwertgruppen angewendet.

Im Vergleich der Ergebniswertekarten 31 bis 34 zu den Wertekarten 41 bis 46 können auf den Ergebniswertekarten 31 bis 34 deutliche Verbesserungen erkannt werden. Zum einen ist der Einfluss des Primärsignals, welcher als schwarzer Randbereich 51 in den Wertekarten 41 bis 46 vorhanden ist, in den der Messwertekarten 31 bis 34 deutlich verringert. Zum anderen gehen die in dem Messfeld vorhandenen Objekte weitaus deutlicher aus den Ergebniswertekarten 31 bis 34 hervor. Bei den hier vorhandenen Objekten handelt es sich um einige kleinere Objekte 53 und um zwei tiefer liegende Objekte 54.

Zwar kann auf den hier vorliegenden Wertekarten 31 bis 34 und 41 bis 46 durch die lediglich grau schattierte Darstellung nicht eindeutig erkannt werden, dass mittels des erfindungsgemäßen Verfahrens eine deutliche Rauschunterdrückung zusätzlich zum bodenkompensierenden Effekt erreicht wird. Dies ist jedoch auf farbcodierten Wertekarten ersichtlich.

Basierend auf den nun erhaltenen Ergebniswertekarten 31 bis 34 ist es für den Anwender relativ leicht möglich, bedingt durch die georeferenzierte Darstellung, die Position der einzelnen Objekte auch auf dem Messfeld zu bestimmen.

In dem hier dargestellten Ausführungsbeispiel wurden als statistische Charakteristika das arithmetische Mittel und als arithmetische Verknüpfung eine Subtraktion verwendet. Insbesondere bei der Auswahl der arithmetischen Verknüpfung aber auch bei der Auswahl der statistischen Charakteristika für die Ermittlung der Skalierungsfaktoren, ist es maßgeblich, welche Eigenschaften der Boden des zu untersuchenden Messfeldes 6 aufweist. Je nach Eigenschaften können unterschiedliche arithmetische Verknüpfungen zu besseren und aussagekräftigeren Ergebnissen führen.

Durch die Darstellung der einzelnen Schritte in Form der Wertekarten 31 bis 34 und der Wertekarten 41 bis 46 wird es dem Anwender auch ermöglicht, verschiedene arithmetische Verknüpfungen und verschiedene Skalierungsfaktoren basierend auf unterschiedlichen statistischen Charakteristika auszuprobieren, so dass er für den jeweiligen Anwendungsfall die optimale Kombination wählen kann, die zu dem besten Ergebnis führt.

Ein weiterer Vorteil des erfindungsgemäßen Verfahrens gegenüber dem aus dem Stand der Technik bekannten bodenkompensierenden Verfahren ist, dass entsprechend der Erfindung das gesamte Messfeld zur Analyse des Bodens und damit zur Bodenkompensation herangezogen wird. Die Vorteile des erfindungsgemäßen Verfahrens ergeben sich insbesondere, wenn sich die Bodeneigenschaften über das Messfeld verändern. Beispielsweise, wenn ein Teil des Messfelds asphaltierter Bereich ist, insbesondere mit einer magnetischen Asphaltfläche, und ein anderer Bereich normaler Erdboden ist. Selbige Vorteile ergeben sich beispielsweise auch bei Bereichen des Messfeldes, welche aus Basaltschotterwegen bestehen. Insbesondere innerhalb von Städten zeigen sich die Vorteile der Möglichkeit des Erkennens beziehungsweise Herausfilterns von Abwasserleitungen, Abwasserkanälen, Stromleitungen oder anderen vergrabenen Leitungen.

Im Rahmen des erfindungsgemäßen Verfahrens besteht auch die Möglichkeit, das Messfeld 6 auch nach der Messung und beim Vorliegen der Messwerte als Rohdaten, für die weitere Auswertung und Interpretation in Teilfelder aufzuteilen, mit dem Ziel, die Teilfelder einzeln unterschiedlichen Verknüpfungen und Skalierungen zuzuführen.

Ein Teilfeld würde dann im Sinne eines kleinen Messfeldes ausgewertet werden.

Mit der vorliegenden Erfindung ist es möglich, auf zuverlässige und einfache Weise im Erdboden befindliche Objekte zu detektieren, da eine außergewöhnlich gute Bodenkompensation und Rauschunterdrückung angeboten wird.

## Patentansprüche

1. Verfahren zur Detektion von Objekten in einem Messfeld, mithilfe einer Primärimpulse aussendenden Sendeschleife und einer Empfangsschleife, die an unterschiedlichen Orten innerhalb des Messfeldes platziert wird, um erzeugte Sekundärsignale zu empfangen,
wobei für jeden der unterschiedlichen Orte der Empfangsschleife
• mittels der Sendeschleife (1) ein Primärimpuls (11) ausgesendet wird, und
• das durch den Primärimpuls (11) erzeugte Sekundärsignal (12) mittels der Empfangsschleife (2) empfangen wird, und
bei dem zum Ermitteln von Messwerten
• das an jedem der unterschiedlichen Orte empfangene Sekundärsignal (12) zu mindestens zwei zeitlichen Abständen zu seinem jeweiligen Primärimpuls abgetastet wird, um mindestens zwei Messwerte (21, 22, 23, 24, 25, 26) zu ermitteln,
• wobei die Messwerte mittels einer Georeferenz georeferenziert aufgenommen werden,
**dadurch gekennzeichnet,**
**dass** zum Auswerten der aufgenommenen georeferenzierten Messwerte (21, 22, 23, 24, 25, 26)
• die an unterschiedlichen Orten ermittelten Messwerte (21, 22, 23, 24, 25, 26) desselben zeitlichen Abstands zu dem jeweiligen Primärimpuls, zu einer Messwertgruppe zusammengefasst werden,
• zu den Messwertgruppen eine oder mehrere statistische Charakteristika ermittelt werden,
• mittels der einen oder mehreren statistischen Charakteristika für die Messwertgruppe ein oder mehrere Skalierungsfaktoren ermittelt werden,
• die mindestens zwei Messwertgruppen mit dem jeweiligen Skalierungsfaktor skaliert und miteinander arithmetisch zu mindestens einer Ergebnisgruppe verknüpft werden, wobei die arithmetische Verknüpfung jeweils Messwerte des selben Ortes verknüpft und die Zuordnung auf Grundlage der aufgenommenen Georeferenz erfolgt, und
• die mindestens eine Ergebnisgruppe in einer zwei- oder mehrdimensionalen Ergebniswertekarte (31, 32, 33, 34) ausgegeben wird.

2. Verfahren nach Anspruch 1,
**dadurch gekennzeichnet,**
**dass** zum Berechnen des Skalierungsfaktors die Messwertgruppen das Verhältnis der statistischen Charakteristika aller oder ausgewählter Messgruppen zueinander berücksichtigt wird.

3. Verfahren nach Anspruch 1 oder 2,
**dadurch gekennzeichnet,**
**dass** als statistische Charakteristika Informationen zur Spannweite, Streuung, Meridian und/oder Interquantialbereichen einer Messwertgruppe verwendet werden.

4. Verfahren nach einem der Ansprüche 1 bis 3,
**dadurch gekennzeichnet,**
**dass** jedes Sekundärsignal (12) zu N Zeitpunkten (N>2) zum Ermitteln von N Messwerten (21, 22, 23, 24, 25, 26) abgetastet wird und
**dass** die skalierte Messwertgruppe des ersten Zeitpunktes jeweils mit der skalierten Messwertgruppe des zweiten bis N-ten Zeitpunktes arithmetisch verknüpft wird, um N-1 Ergebnisgruppen zu erzeugen.

5. Verfahren nach einem der Ansprüche 1 bis 3,
**dadurch gekennzeichnet,**
**dass** jeweils skalierte Messwertgruppen benachbarter Zeitpunkte miteinander arithmetisch verknüpft werden.

6. Verfahren nach einem der Ansprüche 1 bis 3,
**dadurch gekennzeichnet,**
**dass** Ergebnisgruppen mindestens zweier arithmetisch verknüpfter skalierter Messwertgruppen erneut arithmetisch miteinander verknüpft werden.

7. Verfahren nach einem der Ansprüche 1 bis 6,
**dadurch gekennzeichnet,**
**dass** die arithmetische Verknüpfung der mindestens zwei Messwertgruppen derart gewählt wird, dass Rauschen und/oder Störsignale unterdrückt werden.

8. Verfahren nach einem der Ansprüche 1 bis 7,
**dadurch gekennzeichnet,**
**dass** zur Auswahl der arithmetischen Verknüpfung die Messwertgruppen in einer zwei- oder mehrdimensionalen, insbesondere farbigen, Wertekarte (41, 42, 43, 44, 45, 46) ausgegeben werden.

9. Verfahren nach einem der Ansprüche 1 bis 8,
**dadurch gekennzeichnet,**
**dass** die zwei- oder mehrdimensionale Ergebniswertekarte (31, 32, 33, 34) eine Farbkodierung aufweist.

10. Verfahren nach einem der Ansprüche 1 bis 9,
**dadurch gekennzeichnet,**
**dass** als Georeferenz eine relative oder absolute Georeferenz verwendet wird.

11. Verfahren nach einem der Ansprüche 1 bis 10,
**dadurch gekennzeichnet,**
**dass** ein Primärimpuls mit einer Pulslänge im Bereich von 1 ms verwendet wird, der insbesondere als Bipolarimpuls ausgeformt ist.

12. Verfahren nach einem der Ansprüche 1 bis 11,
**dadurch gekennzeichnet,**
**dass** die mindestens zwei Zeitpunkte zum Ermitteln der Messwerte (21, 22, 23, 24, 25, 26) im Bereich von 80 µs bis 1,3 ms nach Beendigung des Aussendens des Primärimpulses (11) vorgesehen werden.

13. Verfahren nach einem der Ansprüche 1 bis 12,
**dadurch gekennzeichnet,**
**dass** als Sendeschleife (1) eine Großschleife insbesondere mit einer Kantenlänge im Bereich von 20 m bis 40 m verwendet wird.

14. Verfahren nach einem der Ansprüche 1 bis 12,
**dadurch gekennzeichnet,**
**dass** als Sendeschleife (1) eine mobile Schleife insbesondere mit einer Länge im Bereich von 1 m verwendet wird.

15. Verfahren nach einem der Ansprüche 1 bis 14,
**dadurch gekennzeichnet,**
**dass** als Empfangsschleife (2) eine mobile Schleife insbesondere mit einem Durchmesser im Bereich von 260 mm oder einer Länge im Bereich von 1 m eingesetzt wird.

## Claims

1. Method for detecting objects in a measuring field by means of a transmission loop which emits primary pulses, and a receiving loop which is placed at different locations within the measuring field in order to receive generated secondary signals,
wherein for each of the different locations of the receiving loop
• a primary pulse (11) is emitted by means of the transmission loop (1), and
• the secondary signal (12) generated by the primary pulse (11) is received by means of the receiving loop (2), and
in which, for the determination of measuring values
• the secondary signal (12) received at each of the different locations is scanned in relation to its respective primary pulse at at least two time intervals in order to determine at least two measuring values (21, 22, 23, 24, 25, 26),
• wherein the measuring values are captured in a georeferenced manner by means of a geo-reference,
**characterized in that**
for the evaluation of the captured, georeferenced measuring values (21, 22, 23, 24, 25, 26)
• the measuring values (21, 22, 23, 24, 25, 26) determined at different locations of the same time interval with respect to the respective primary pulse are grouped to form a group of measuring values,
• one or more statistical characteristics are determined about the groups of measuring values,
• one or more scaling factors are determined by means of the one or more statistical characteristics for the group of measuring values,
• the at least two groups of measuring values are scaled with the respective scaling factor and are linked with one another in an arithmetic manner to form at least one result group, wherein the arithmetic link respectively links measuring values of the same location and the assignment occurs based on the captured geo-reference, and
• the at least one result group is output in a two-dimensional or multi-dimensional result value map (31, 32, 33, 34).

2. Method according to claim 1,
**characterized in that**
for the calculation of the scaling factor of the groups of measuring values, the ratio of the statistical characteristics of all or of selected measuring groups amongst one another is taken into account.

3. Method according to claim 1 or 2,
**characterized in that**
information about the range, spread, meridian and/or inter-quantial ranges of a group of measuring values are used as statistical characteristics.

4. Method according to any one of claims 1 to 3,
**characterized in that**
each secondary signal (12) is sampled at N points of time (N>2) to determine N measuring values (21, 22, 23, 24, 25, 26), and
the scaled group of measuring values of the first point of time is respectively arithmetically linked with the scaled group of measuring values of the second to N-th points of time, to generate N-1 result groups.

5. Method according to any one of claims 1 to 3,
**characterized in that**
respective scaled groups of measuring values of neighboring points of time are arithmetically linked with one another.

6. Method according to any one of claims 1 to 3,
**characterized in that**
result groups of at least two arithmetically-linked and scaled groups of measuring values are again arithmetically linked with one another.

7. Method according to any one of claims 1 to 6,
**characterized in that**
the arithmetical link of the at least two groups of measuring values is selected in such a way that noise and/or interference signals are suppressed.

8. Method according to any one of claims 1 to 7,
**characterized in that**
for the selection of the arithmetic link, the groups of measuring values are output in a two-dimensional or multi-dimensional, in particular colored, value map (41, 42, 43, 44, 45, 46).

9. Method according to any one of claims 1 to 8,
**characterized in that**
the two-dimensional or multi-dimensional result value map (31, 32, 33, 34) has a color coding.

10. Method according to any one of claims 1 to 9,
**characterized in that**
a relative or absolute geo-reference is used as the geo-reference.

11. Method according to any one of claims 1 to 10,
**characterized in that**
a primary pulse of a pulse length in the range of 1 ms is used, which pulse in particular is configured as a bipolar pulse.

12. Method according to any one of claims 1 to 11,
**characterized in that**
the at least two points of time for the determination of the measuring values (21, 22, 23, 24, 25, 26) are provided in the range of 80 µs to 1,3 ms after the stopping of the emission of the primary pulse (11).

13. Method according to any one of claims 1 to 12,
**characterized in that**
a large loop, in particular with an edge length in the range of 20 m to 40 m, is used as the transmission loop (1).

14. Method according to any one of claims 1 to 12,
**characterized in that**
a mobile loop, in particular with a length in the range of 1 m, is used as the transmission loop (1).

15. Method according to any one of claims 1 to 14,
**characterized in that**
a mobile loop, in particular with a diameter in the range of 260 mm or a length in the range of 1 m, is used as the receiving loop (2).

## Revendications

1. Procédé de détection d'objets dans un champ de mesure à l'aide d'une boucle émettrice envoyant des impulsions primaires et d'une boucle réceptrice, qui est placée à des emplacements différents à l'intérieur du champ de mesure pour recevoir des signaux secondaires générés,
dans lequel pour chacun des différents emplacements de la boucle réceptrice,
- une impulsion primaire (11) est envoyée au moyen de la boucle émettrice (1), et
- le signal secondaire (12) engendré par l'impulsion primaire (11) est reçu au moyen de la boucle réceptrice (2), et
où pour déterminer des valeurs de mesure
- le signal secondaire (12) reçu au niveau de chacun des différents emplacements est échantillonné sur au moins deux intervalles de temps par rapport à son impulsion primaire respective pour déterminer au moins deux valeurs de mesure (21, 22, 23, 24, 25, 26),
- dans lequel les valeurs de mesure sont enregistrées de manière géoréférencée au moyen d'une géoréférence,
**caractérisé en ce**
**que** pour analyser les valeurs de mesure (21, 22, 23, 24, 25, 26) géoréférencées enregistrées,
- les valeurs de mesure (21, 22, 23, 24, 25, 26), déterminées au niveau d'emplacements différents, dans le même intervalle de temps par rapport à l'impulsion primaire respective, sont regroupées en un groupe de valeurs de mesure,
- pour les groupes de valeurs de mesure, une ou plusieurs caractéristiques statistiques sont déterminées,
- un ou plusieurs facteurs de mise à l'échelle sont déterminés pour le groupe de valeurs de mesure au moyen des une ou plusieurs caractéristiques statistiques,
- les au moins deux groupes de valeur de mesure sont mis à l'échelle avec le facteur de mise à l'échelle respectif et sont combinés entre eux de manière arithmétique pour former au moins un groupe de résultats, dans lequel la combinaison arithmétique combine respectivement des valeurs de mesure du même emplacement et le classement est effectué sur la base de la géoréférence enregistrée, et
- l'au moins un groupe de résultats est édité sur une carte de valeurs de résultat (31, 32, 33, 34) bi- ou tridimensionnelle.

2. Procédé selon la revendication 1,
**caractérisé en ce**
**que**, pour calculer le facteur de mise à l'échelle, les groupes de valeurs de mesure tiennent compte du rapport des caractéristiques statistiques de tous les groupes de mesure ou de groupes de mesure sélectionnés les unes par rapport aux autres.

3. Procédé selon la revendication 1 ou 2,
**caractérisé en ce**
**que** sont utilisées en tant que caractéristiques statistiques des informations portant sur l'étendue, la dispersion, le méridien [A1] et/ou des écarts interquartiles d'un groupe de valeurs de mesure.

4. Procédé selon l'une quelconque des revendications 1 à 3,
**caractérisé en ce**
**que** chaque signal secondaire (12) est échantillonné à N moments (N > 2) pour déterminer N valeurs de mesure (21, 22, 23, 24, 25, 26), et
**que** le groupe de valeurs de mesure mis à l'échelle du premier moment est combiné de manière arithmétique respectivement au groupe de valeurs de mesure mis à l'échelle du deuxième au nième moment pour générer N-1 groupes de résultats.

5. Procédé selon l'une quelconque des revendications 1 à 3,
**caractérisé en ce**
**que** respectivement des groupes de valeurs de mesure mis à l'échelle de moments adjacents sont combinés les uns aux autres de manière arithmétique.

6. Procédé selon l'une quelconque des revendications 1 à 3,
**caractérisé en ce**
**que** des groupes de résultats d'au moins deux groupes de valeurs de mesure mis à l'échelle combinés de manière arithmétique sont combinés entre eux à nouveau de manière arithmétique.

7. Procédé selon l'une quelconque des revendications 1 à 6,
**caractérisé en ce**
**que** la combinaison arithmétique des au moins deux groupes de valeurs de mesure est choisie de manière à supprimer du bruit et/ou des signaux parasites.

8. Procédé selon l'une quelconque des revendications 1 à 7,
**caractérisé en ce**
**que**, pour choisir la combinaison arithmétique, les groupes de valeurs de mesure sont édités sur une carte de valeurs (41, 42, 43, 44, 45, 46) bi- ou tridimensionnelle, en particulier en couleur.

9. Procédé selon l'une quelconque des revendications 1 à 8,
**caractérisé en ce**
**que** la carte de valeurs de résultat (31, 32, 33, 34) bi- ou tridimensionnelle présente un codage de couleur.

10. Procédé selon l'une quelconque des revendications 1 à 9,
**caractérisé en ce**
**qu'**une géoréférence relative ou absolue est utilisée en tant que géoréférence.

11. Procédé selon l'une quelconque des revendications 1 à 10,
**caractérisé en ce**
**qu'**une impulsion primaire avec une longueur d'impulsion dans une plage de 1 ms est utilisée, qui est formée en particulier en tant qu'impulsion bipolaire.

12. Procédé selon l'une quelconque des revendications 1 à 11,
**caractérisé en ce**
**que** les au moins deux moments pour déterminer les valeurs de mesure (21, 22, 23, 24, 25, 26) sont prévus dans une plage de 80 µs à 1,3 ms à la fin de l'envoi de l'impulsion primaire (11).

13. Procédé selon l'une quelconque des revendications 1 à 12,
**caractérisé en ce**
**qu'**est utilisée en tant que boucle émettrice (1) une grande boucle, en particulier avec une longueur d'arête dans une plage de 20 m à 40 m.

14. Procédé selon l'une quelconque des revendications 1 à 12,
**caractérisé en ce**
**qu'**est utilisée en tant que boucle émettrice (1) une boucle mobile, en particulier avec une longueur dans une plage de 1 m.

15. Procédé selon l'une quelconque des revendications 1 à 14,
**caractérisé en ce**
**qu'**est employée en tant que boucle réceptrice (2) une boucle mobile, en particulier avec un diamètre dans une plage de 260 mm ou une longueur dans une plage de 1 m.
